# EUROPEAN PATENT APPLICATION

(11) **EP 3 054 401 A1**
(43) Date of publication of application: **10.08.2016**
(21) Application number: 14849309.1
(22) Date of filing: 18.07.2014
(51) Int. Cl.: G06K 17/00

(54) **DATA LABEL CARRIER INFORMATION APPLICATION AND PROCESSING SYSTEM AND METHOD**

(30) Priority: 30.09.2013 CN 201310460760
(71) Applicant: Qu, Lidong, Beijing 100088 (CN)
(72) Inventor: Qu, Lidong, Beijing 100088 (CN)
(74) Representative: Szabo, Zsolt
(86) International application number: PCT/CN2014/082549
(87) International publication number: WO 2015/043294

(57) **Abstract**

The present invention relates to systems and methods for applying and processing data tag carrier information, and belongs to the technical field of computer communication and application. Wherein, after the first terminal obtains the initial data tag, the first data tag is released through each of the first carriers in the first carrier group; then, the Nth data tag also can be released through each of the Nth carriers in the Nth carrier group, so that the present invention can effectively record information of the carrier of the data tag during the transmission process of the data tag, support the transmission of the data tag displayed by an offline carrier, and expand the transmission range of the data tag; in addition, in the processing system and method of the present invention, after the final terminal interacts with the function server to achieve the service functions, the function server can obtain the transmission path corresponding to the initial data tag, so that the data tag can be applied in a larger commercial scale, moreover, in the systems and the methods for applying and processing data tag carrier information of the present invention, the structures of the systems are simple, the realization modes of the methods are simple and convenient, and the realization costs are low.

## Description

### Field of Technology

The present invention relates to the technical field of information dissemination, especially to the technical field of network-based data tag, in particular to systems and methods for applying and processing data tag carrier information.

### Description of Related Arts

After bar code as one data tag was developed, it was applied firstly and widely in fields such as logistics and operations management, identification card management, and so on, due to its characteristics such as large information capacity, high security, high rate of data retrieval, and error correction ability. With the popularity of intelligent terminals with data communication function, the bar code gets new applications in the Object-to-Object (OTO) field, such as information acquisition, online shopping, commodity anti-counterfeiting, identity authentication, coupon distribution, and so on, by use of the merits of the bar code being a cross-media channel, the intelligent terminals connecting to the internet in real time, and the bar code being captured by cameras. However, the applications of the bar code in the OTO field focus mainly on providing access convenience in e-commerce; it still lacks in-depth applications.

On the other hand, bar code such as two-dimensional code data have been able to be displayed widely on various offline carriers, such as be published on magazines or displayed on the external walls of buildings, and so on, so that audiences can obtain information of related commodities or services. This way enables one user to obtain tag data information from more types of carriers by using intelligent terminal equipments such as mobile phones and so on, so as to achieve corresponding functions. However, different from a data tag displayed completely on an online device, a data tag is difficult to be transmitted again after the user obtains the data tag provided by an offline carrier, i.e. it is hard to realize forwarding and sharing, especially forwarding and sharing the data tag again by using another offline carrier can not be achieved, furthermore, the data tag transmission path achieved by the offline carrier can not be recorded, which limits the transmission ranges of the data tag and its corresponding services, and finally has a great restriction to the large-scale commercial application of the data tag.

### Summary of the Invention

In order to overcome the above mentioned shortcomings of the prior art, one object of the present invention is to provide systems and methods for applying and processing data tag carrier information, which can effectively record information of the carrier of the data tag during the transmission process of the data tag, and at the same time support the transmission of the data tag displayed by an offline carrier, to expand the transmission range of the data tag, so as to record the whole transmission path of the data tag, so that the data tag can be applied in a larger commercial scale, moreover the structures of the systems are simple, the realization modes of the methods are simple and convenient, and the realization costs are low.

In order to realize the above object, in a first aspect of the present invention, a system for applying data tag carrier information is provided, and has the following structure:
The system comprises a first terminal and a first carrier group. Wherein, the first terminal is used to obtain an initial data tag from an initial carrier, the initial data tag includes corresponding initial service processing information and corresponding information of the initial carrier; the first carrier group is connected to the first terminal, includes at least one first carrier, and is used to obtain the initial data tag from the first terminal, and release a first data tag through each of the first carriers, the first data tag includes first service processing information, information of the first terminal and information of the first carrier releasing the first data tag.
The system for applying data tag carrier information further comprises a Nth terminal and a Nth carrier group. Wherein, the Nth terminal is used to obtain a N-1th data tag from a N-1th carrier, the N-1th data tag includes corresponding N-1th service processing information, corresponding information of the N-1th terminal and corresponding information of the N-1th carrier; the Nth carrier group is connected to the Nth terminal, includes at least one Nth carrier, and used to obtain the N-1th data tag from the Nth terminal, and release a Nth data tag through each of the Nth carriers, the Nth data tag includes Nth service processing information, information of the Nth terminal and information of the Nth carrier releasing the Nth data tag.
The system for applying data tag carrier information further comprises a carrier resource manager connected to the first terminal and the Nth terminal, the carrier resource manager stores information of the carrier groups connected to the terminals, and is used to send corresponding information of the carrier groups to the first terminal and the Nth terminal.
In the system for applying data tag carrier information, the first data tag further includes the information of the initial carrier; the Nth data tag further includes the information of the N-1th carrier.
In the system for applying data tag carrier information, the system further comprises a service processing information manager connected to the first terminal and the Nth terminal, the service processing information manager is used to store the first service processing information, the Nth service processing information and the corresponding information of the first terminal, the corresponding information of the first carrier and the corresponding information of the Nth terminal and the corresponding information of the Nth carrier.
In the system for applying data tag carrier information, the data tag is a bar code or a RFID tag.
In the system for applying data tag carrier information, the carrier is a display equipment, a printed matter, a building wall surface or a furniture surface.
In the system for applying data tag carrier information, the data tag includes an electronic tag determined according to a specific coding rule, the first data tag includes the first service processing information, the information of the first terminal and a first electronic tag releasing the first data tag; the Nth data tag includes the Nth service processing information, the information of the Nth terminal and a Nth electronic tag releasing the Nth data tag.
In the system for applying data tag carrier information, each of the first terminal and the Nth terminal has an electronic tag module, the electronic tag modules of the first terminal and the Nth terminal are used to obtain the corresponding first electronic tag and the corresponding Nth electronic tag respectively via a network.
The system for applying data tag carrier information further comprises an electronic tag server, connected to the first terminal and the Nth terminal respectively via the network, the electronic tag server stores the first electronic tag and the Nth electronic tag, and is used to provide the first data tag corresponding to the first electronic tag to the first terminal and provide the Nth data tag corresponding to the Nth electronic tag to the Nth terminal.
The system for applying data tag carrier information further comprises a network access device, connected to the first terminal and the Nth terminal respectively, the network access device stores the first electronic tag and the Nth electronic tag and the first data tag corresponding to the first electronic tag and the Nth data tag corresponding to the Nth electronic tag, and is used to provide the first data tag corresponding to the first electronic tag to the first terminal and provide the Nth data tag corresponding to the Nth electronic tag to the Nth terminal.
In the system for applying data tag carrier information, the electronic tag is a wireless network identifier SSID.
In the system for applying data tag carrier information, the terminal is a PC, a smart phone, a tablet PC or a RFID tag scanner.

In a second aspect of the present invention, a method for applying data tag carrier information is provided, and comprises the following steps:
(A1) obtaining an initial data tag from an initial carrier through a first terminal according to an operation of a first user, the initial data tag including corresponding initial service processing information and corresponding information of the initial carrier;
(A2) sending the initial data tag to a first carrier group connected to the first terminal through the first terminal, the first carrier group including at least one first carrier;
(A3) releasing a first data tag through each of the first carriers in the first carrier group, the first data tag including first service processing information, information of the first terminal and information of the first carrier releasing the first data tag.

The method for applying data tag carrier information further comprises the following steps:
(B1) obtaining a N-1th data tag from a N-1th carrier through a Nth terminal according to an operation of a Nth user;
(B2) sending the N-1th data tag to a Nth carrier group connected to the Nth terminal through the Nth terminal, the Nth carrier group including at least one Nth carrier;
(B3) releasing a Nth data tag through each of the Nth carriers in the Nth carrier group, the Nth data tag including Nth service processing information, information of the Nth terminal and information of the Nth carrier releasing the Nth data tag.

In the method for applying data tag carrier information, the first terminal and the Nth terminal are connected to a carrier resource manager, the carrier resource manager stores information of the carrier groups connected to the terminals, and the step (A2) comprises the following step in details: obtaining the information of the first carrier group connected to the first terminal via the carrier resource manager, and sending the initial data tag to the at least one first carrier in the first carrier group through the first terminal; the step (B2) comprises the following step in details: obtaining the information of the Nth carrier group connected to the Nth terminal via the carrier resource manager, and sending the N-1th data tag to the at least one Nth carrier in the Nth carrier group through the Nth terminal.

In the method for applying data tag carrier information, the first data tag further includes the information of the initial carrier; the Nth data tag further includes the information of the N-1th carrier.

In the method for applying data tag carrier information, the first terminal and the Nth terminal are connected to a service processing information manager, and the method further comprises the following steps:
(A4) storing the first service processing information and the corresponding information of the first terminal and the corresponding information of the first carrier through the service processing information manager;
(B4) storing the Nth service processing information and the corresponding information of the Nth terminal and the corresponding information of the Nth carrier through the service processing information manager.

In the method for applying data tag carrier information, the data tag is a bar code or a RFID tag.

In the method for applying data tag carrier information, the data tag includes an electronic tag determined according to a specific coding rule, and the step (A3) comprises the following step in details: releasing the first data tag through each of the first carriers in the first carrier group, the first data tag including the first service processing information, the information of the first terminal and a first electronic tag releasing the first data tag; the step (B3) comprises the following step in details: releasing the Nth data tag through each of the Nth carriers in the Nth carrier group, the Nth data tag including the Nth service processing information, the information of the Nth terminal and a Nth electronic tag releasing the Nth data tag.

In the method for applying data tag carrier information, each of the first terminal and the Nth terminal has an electronic tag module and is connected to an electronic tag server, the electronic tag server stores the first electronic tag and the Nth electronic tag, and the step (A3) comprises the following step in details: releasing the first data tag obtained from the electronic tag server through each of the first carriers in the first carrier group, the first data tag including the first service processing information, the information of the first terminal and the first electronic tag releasing the first data tag; the step (B3) comprises the following step in details: releasing the Nth data tag obtained from the electronic tag server through each of the Nth carriers in the Nth carrier group, the Nth data tag including the Nth service processing information, the information of the Nth terminal and the Nth electronic tag releasing the Nth data tag.

In the method for applying data tag carrier information, each of the first terminal and the Nth terminal has an electronic tag module and is connected to a network access device, the network access device stores the first electronic tag or the Nth electronic tag and the first data tag corresponding to the first electronic tag and the Nth data tag corresponding to the Nth electronic tag, and the step (A3) comprises the following step in details: releasing the first data tag obtained from the network access device through each of the first carriers in the first carrier group, the first data tag including the first service processing information, the information of the first terminal and the first electronic tag releasing the first data tag; the step (B3) comprises the following step in details: releasing the Nth data tag obtained from the network access device through each of the Nth carriers in the Nth carrier group, the Nth data tag includes the Nth service processing information, the information of the Nth terminal and the Nth electronic tag releasing the Nth data tag.

In the method for applying data tag carrier information, the electronic tag is a wireless network identifier SSID.

In a third aspect of the present invention, a system for processing data tag carrier information is provided, and comprises: the system for applying data tag carrier information mentioned previously, a final terminal and a function server. Wherein, the final terminal is used to, according to an operation of a final user, obtain the first data tag or the Nth data tag from the first carrier or the Nth carrier, and parse the first data tag or the Nth data tag, to obtain the corresponding first/Nth service processing information, the corresponding information of the first/Nth terminal and the corresponding information of the first/Nth carrier; the function server is used to generate and release the initial data tag according to service functions, and is used to interact with the final terminal, to realize the service functions.

In the system for processing data tag carrier information, the function server is further connected to a service processing information manager, the service processing information manager is used to obtain the information of the carrier releasing the first/Nth service processing information from the service processing information manager according to the first/Nth service processing information, and determine the initial service processing information and its transmission path according to the information of the carrier releasing the first/Nth service processing information.

In a fourth aspect of the present invention, a method for processing data tag carrier information is provided, and comprises the following steps:
(C1) releasing the first data tag or the Nth data tag on the first carrier or the Nth carrier with the method for applying data tag carrier information mentioned previously;
(C2) obtaining the first data tag or the Nth data tag through a final terminal according to an operation of a final user;
(C3) parsing the first data tag or the Nth data tag through the final terminal, to obtain the corresponding first/Nth service processing information, the corresponding information of the first/Nth terminal and the corresponding information of the first/Nth carrier;
(C4) interacting the final intelligent terminal with a function server corresponding to the first/Nth service processing information according to the first/Nth service processing information to achieve service functions.

In the method for processing data tag carrier information, the function server is further connected to a service processing information manager, and the method further comprises the following steps:
(C5) obtaining the information of the carrier releasing the first/Nth service processing information from the service processing information manager through the function server according to the first/Nth service processing information;
(C6) determining the initial service processing information and its transmission path through the function server according to the information of the carrier releasing the first/Nth service processing information.

In the method for processing data tag carrier information, the method further comprises the following step before the step (C1):
(C0) generating and releasing the initial data tag having the initial service processing information and the information of the initial carrier on the initial carrier through the function server.

With the systems and the methods for applying and processing data tag carrier information of the present invention, after the first terminal in the application system obtains the initial data tag, the first data tag including the first service processing information, the information of the first terminal and the information of the first carrier is released through each of the first carriers in the first carrier group; then, after the subsequent Nth terminal obtains the N-1th data tag of the previous terminal, the Nth data tag also can be released through each of the Nth carriers in the Nth carrier group, so that the present invention can effectively record information of the carrier of the data tag during the transmission process of the data tag, and at the same time support the transmission of the data tag displayed by an offline carrier, to expand the transmission range of the data tag; in addition, in the processing system and method of the present invention, after the final terminal interacts with the function server to achieve the service functions, the function server can obtain the transmission path corresponding to the initial data tag, so that the data tag can be applied in a larger commercial scale, moreover, in the systems and the methods for applying and processing data tag carrier information of the present invention, the structures of the systems are simple, the realization modes of the methods are simple and convenient, and the realization costs are low.

### Brief Description of the Drawings

Fig. 1 shows a flow chart of the steps of the method for applying data tag carrier information of the present invention.
Fig. 2 shows a block diagram of one embodiment of the system for processing data tag carrier information of the present invention in practical applications.
Fig. 3 shows a block diagram of another embodiment of the system for processing data tag carrier information of the present invention in practical applications.
Fig. 4 shows a schematic view of the application mode of the method for applying data tag carrier information of the present invention using the electronic tag as the data tag in practical applications.

### Detailed Description of the Preferred Embodiment

In order to understand the technical content of the present invention clearly, the present invention is further exemplified by reference to the following examples.

In one embodiment, the system for applying data tag carrier information of the present invention comprises a first terminal and a first carrier group. Wherein, the first terminal is used to obtain an initial data tag from an initial carrier, the initial data tag includes corresponding initial service processing information and corresponding information of the initial carrier; the first carrier group is connected to the first terminal, includes at least one first carrier, and is used to obtain the initial data tag from the first terminal, and release a first data tag through each of the first carriers, the first data tag includes first service processing information, information of the first terminal and information of the first carrier releasing the first data tag. The terminal can be an equipment such as a PC, a smart phone, a tablet PC or a RFID tag scanner.

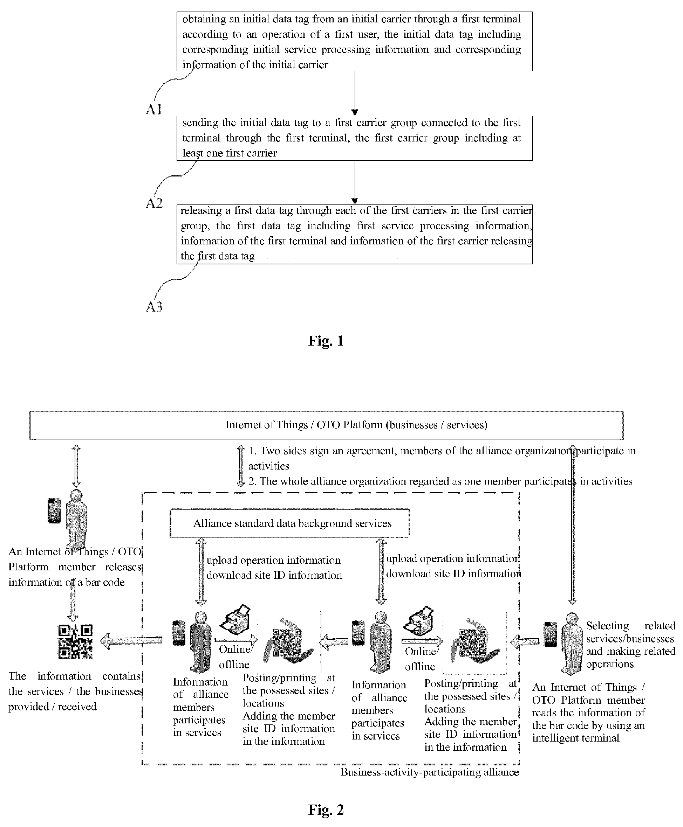

The method for applying data tag carrier information implemented by using the system described in this embodiment, as shown in Fig. 1, comprises the following steps:
(A1) obtaining an initial data tag from an initial carrier through a first terminal according to an operation of a first user, the initial data tag including corresponding initial service processing information and corresponding information of the initial carrier;
(A2) sending the initial data tag to a first carrier group connected to the first terminal through the first terminal, the first carrier group including at least one first carrier;
(A3) releasing a first data tag through each of the first carriers in the first carrier group, the first data tag including first service processing information, information of the first terminal and information of the first carrier releasing the first data tag.

In a more preferred embodiment, the system for applying data tag carrier information further comprises a Nth terminal and a Nth carrier group. Wherein, the Nth terminal is used to obtain a N-1th data tag from a N-1th carrier, the N-1th data tag includes corresponding N-1th service processing information, corresponding information of the N-1th terminal and corresponding information of the N-1th carrier; the Nth carrier group is connected to the Nth terminal, includes at least one Nth carrier, and used to obtain the N-1th data tag from the Nth terminal, and release a Nth data tag through each of the Nth carriers, the Nth data tag includes Nth service processing information, information of the Nth terminal and information of the Nth carrier releasing the Nth data tag.

The method for applying data tag carrier information implemented by using the system described in this embodiment further comprises the following steps:
(B1) obtaining a N-1th data tag from a N-1th carrier through a Nth terminal according to an operation of a Nth user;
(B2) sending the N-1th data tag to a Nth carrier group connected to the Nth terminal through the Nth terminal, the Nth carrier group including at least one Nth carrier;
(B3) releasing a Nth data tag through each of the Nth carriers in the Nth carrier group, the Nth data tag including Nth service processing information, information of the Nth terminal and information of the Nth carrier releasing the Nth data tag.

In a further preferred embodiment, the system for applying data tag carrier information further comprises a carrier resource manager connected to the first terminal and the Nth terminal, the carrier resource manager stores information of the carrier groups connected to the terminals, and is used to send corresponding information of the carrier groups to the first terminal and the Nth terminal.

In the method for applying data tag carrier information implemented by using the system described in this embodiment, the step (A2) comprises the following step in details: obtaining the information of the first carrier group connected to the first terminal via the carrier resource manager, and sending the initial data tag to the at least one first carrier in the first carrier group through the first terminal; the step (B2) comprises the following step in details: obtaining the information of the Nth carrier group connected to the Nth terminal via the carrier resource manager, and sending the N-1th data tag to the at least one Nth carrier in the Nth carrier group through the Nth terminal.

In an even further preferred embodiment, the first data tag further includes the information of the initial carrier; the Nth data tag further includes the information of the N-1th carrier.

In another further preferred embodiment, the system for applying data tag carrier information further comprises a service processing information manager connected to the first terminal and the Nth terminal, the service processing information manager is used to store the first service processing information, the Nth service processing information and the corresponding information of the first terminal, the corresponding information of the first carrier and the corresponding information of the Nth terminal and the corresponding information of the Nth carrier.

In the method for applying data tag carrier information implemented by using the system described in this embodiment, the method further comprises the following steps:
(A4) storing the first service processing information and the corresponding information of the first terminal and the corresponding information of the first carrier through the service processing information manager;
(B4) storing the Nth service processing information and the corresponding information of the Nth terminal and the corresponding information of the Nth carrier through the service processing information manager.

In another preferred embodiment, the data tag is a bar code or a RFID tag. The carrier is a display equipment, a printed matter, a building wall surface or a furniture surface.

In a more preferred embodiment, the data tag includes an electronic tag determined according to a specific coding rule, the first data tag includes the first service processing information, the information of the first terminal and a first electronic tag releasing the first data tag; the Nth data tag includes the Nth service processing information, the information of the Nth terminal and a Nth electronic tag releasing the Nth data tag.

In the method for applying data tag carrier information implemented by using the system described in this embodiment, the step (A3) comprises the following step in details: releasing the first data tag through each of the first carriers in the first carrier group, the first data tag including the first service processing information, the information of the first terminal and a first electronic tag releasing the first data tag; the step (B3) comprises the following step in details: releasing the Nth data tag through each of the Nth carriers in the Nth carrier group, the Nth data tag including the Nth service processing information, the information of the Nth terminal and a Nth electronic tag releasing the Nth data tag.

The electronic tag can be obtained by connecting an electronic tag server, and also can be obtained by connecting a network access device (such as a router, a signal base station, etc.).

In an embodiment connecting an electronic tag server, each of the first terminal and the Nth terminal has an electronic tag module, the electronic tag modules of the first terminal and the Nth terminal are used to obtain the corresponding first electronic tag and the corresponding Nth electronic tag respectively via a network. The system further comprises an electronic tag server, connected to the first terminal and the Nth terminal respectively via the network, the electronic tag server stores the first electronic tag and the Nth electronic tag, and is used to provide the first data tag corresponding to the first electronic tag to the first terminal and provide the Nth data tag corresponding to the Nth electronic tag to the Nth terminal.

Correspondingly, the step (A3) comprises the following step in details: releasing the first data tag obtained from the electronic tag server through each of the first carriers in the first carrier group, the first data tag including the first service processing information, the information of the first terminal and the first electronic tag releasing the first data tag; the step (B3) comprises the following step in details: releasing the Nth data tag obtained from the electronic tag server through each of the Nth carriers in the Nth carrier group, the Nth data tag including the Nth service processing information, the information of the Nth terminal and the Nth electronic tag releasing the Nth data tag.

In an embodiment connecting a network access device, each of the first terminal and the Nth terminal has an electronic tag module, the electronic tag modules of the first terminal and the Nth terminal are used to obtain the corresponding first electronic tag and the corresponding Nth electronic tag respectively via a network. The system further comprises a network access device, connected to the first terminal and the Nth terminal respectively, the network access device stores the first electronic tag and the Nth electronic tag and the first data tag corresponding to the first electronic tag and the Nth data tag corresponding to the Nth electronic tag, and is used to provide the first data tag corresponding to the first electronic tag to the first terminal and provide the Nth data tag corresponding to the Nth electronic tag to the Nth terminal.

Correspondingly, the step (A3) comprises the following step in details: releasing the first data tag obtained from the network access device through each of the first carriers in the first carrier group, the first data tag including the first service processing information, the information of the first terminal and the first electronic tag releasing the first data tag; the step (B3) comprises the following step in details: releasing the Nth data tag obtained from the network access device through each of the Nth carriers in the Nth carrier group, the Nth data tag includes the Nth service processing information, the information of the Nth terminal and the Nth electronic tag releasing the Nth data tag.

The electronic tag mentioned above can be a wireless network identifier SSID.

The present invention further provides a system for processing data tag carrier information, in one embodiment, the system for processing data tag carrier information comprises: the system for applying data tag carrier information mentioned previously, a final terminal and a function server. Wherein, the final terminal is used to, according to an operation of a final user, obtain the first data tag or the Nth data tag from the first carrier or the Nth carrier, and parse the first data tag or the Nth data tag, to obtain the corresponding first/Nth service processing information, the corresponding information of the first/Nth terminal and the corresponding information of the first/Nth carrier; the function server is used to generate and release the initial data tag according to service functions, and is used to interact with the final terminal, to realize the service functions.

The method for processing data tag carrier information implemented by using the system described in this embodiment comprises the following steps:
(C0) generating and releasing the initial data tag having the initial service processing information and the information of the initial carrier on the initial carrier through the function server;
(C1) releasing the first data tag or the Nth data tag on the first carrier or the Nth carrier with the method for applying data tag carrier information mentioned previously;
(C2) obtaining the first data tag or the Nth data tag through a final terminal according to an operation of a final user;
(C3) parsing the first data tag or the Nth data tag through the final terminal, to obtain the corresponding first/Nth service processing information, the corresponding information of the first/Nth terminal and the corresponding information of the first/Nth carrier;
(C4) interacting the final intelligent terminal with a function server corresponding to the first/Nth service processing information according to the first/Nth service processing information to achieve service functions.

In a preferred embodiment, the function server is further connected to a service processing information manager, the service processing information manager is used to obtain the information of the carrier releasing the first/Nth service processing information from the service processing information manager according to the first/Nth service processing information, and determine the initial service processing information and its transmission path according to the information of the carrier releasing the first/Nth service processing information.

In the method for processing data tag carrier information implemented by using the system described in this preferred embodiment, the method further comprises the following steps:
(C5) obtaining the information of the carrier releasing the first/Nth service processing information from the service processing information manager through the function server according to the first/Nth service processing information;
(C6) determining the initial service processing information and its transmission path through the function server according to the information of the carrier releasing the first/Nth service processing information.

Several embodiments of the systems and the methods for applying and processing data tag carrier information of the present invention in practical applications are further illustrated as follows:

### Embodiment 1

As shown in Fig. 2, a newspaper or magazine publisher has an ad space on a publication, and hopes a business to advertise. On the other hand, a distributor of one product or one service wants to advertise on the publication. Then the publisher (a first user) can take a picture of a two-dimensional code (an initial data tag) provided on a service network (an internet of things / an OTO platform, etc.) of the distributor by using his/her own intelligent terminal (a first terminal), and send the two-dimensional code to a standard data background server (a carrier resource manager). The server stores information of the ad space (information of the carrier) of the publisher, and generates a new two-dimensional code (a first data tag) by using the information of the carrier and the original two-dimensional code and returns it to the publisher, at the same time, the standard data background server records the information of the carrier corresponding to the original two-dimensional code. The publisher then can print the two-dimensional code on the ad space of the publication, which is provided to a user to obtain corresponding information of the product or the service.

### Embodiment 2

On the basis of the embodiment 1 mentioned above, there is one outdoor advertising company (a second user), the company has a number of outdoor advertising spaces (second carriers). Then the outdoor advertising company can take a picture of the two-dimensional code (the first data tag) printed on the publication by using its own intelligent terminal (a second terminal), and send the two-dimensional code (the first data tag) to the standard data background server (the carrier resource manager). The server stores information of the ad spaces (information of the second carriers) of the outdoor advertising company, and generates a new two-dimensional code (a second data tag) by replacing the information of the first carrier in the first data tag with the information of the second carriers and returns it to the outdoor advertising company, at the same time, the standard data background server records the information of the second carrier corresponding to the original two-dimensional code. The outdoor advertising company then can print the two-dimensional code on the outdoor ad spaces, which is provided to a user to obtain corresponding information of the product or the service. In this way, the transmission of the information of the data tag on offline carriers is achieved.

### Embodiment 3

On the basis of the embodiment 1 and the embodiment 2 mentioned above, a user (a final user) sees the advertisement on the advertising space of the publication or the outdoor advertising spaces, and hopes to obtain the corresponding service, at this time, he/she can take a picture of the two-dimensional code (the first or second data tag) on the advertising space of the publication or the outdoor advertising spaces by using his/her own intelligent terminal (a final intelligent terminal), after the two-dimensional code is decoded, the final intelligent terminal interacts with the service network (an internet of things / an OTO platform, etc.) of the distributor to achieve the corresponding service. At this time, the service network (an internet of things / an OTO platform, etc.) of the distributor can obtain the transmission path of the data tag through the standard data background server (the carrier resource manager), and determines information such as business contribution degrees or sharings of various carriers (online or offline) according to the transmission path.

### Embodiment 4

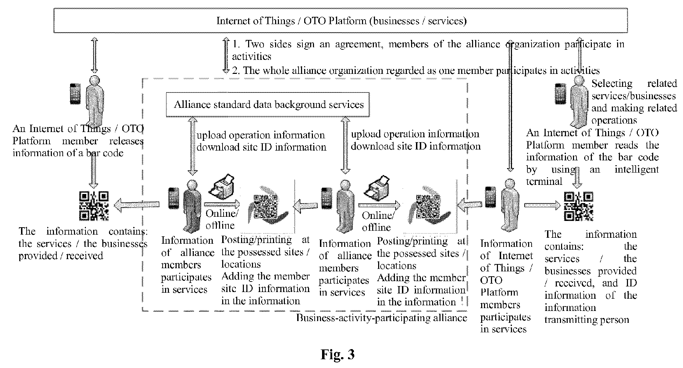

On the basis of the embodiment 3, as shown in Fig. 3, the final user can also become a middle user once again, while obtaining the service, he/she forwards the two-dimensional code (the data tag) to a next user. So that the application scale of the data tag is further expanded.

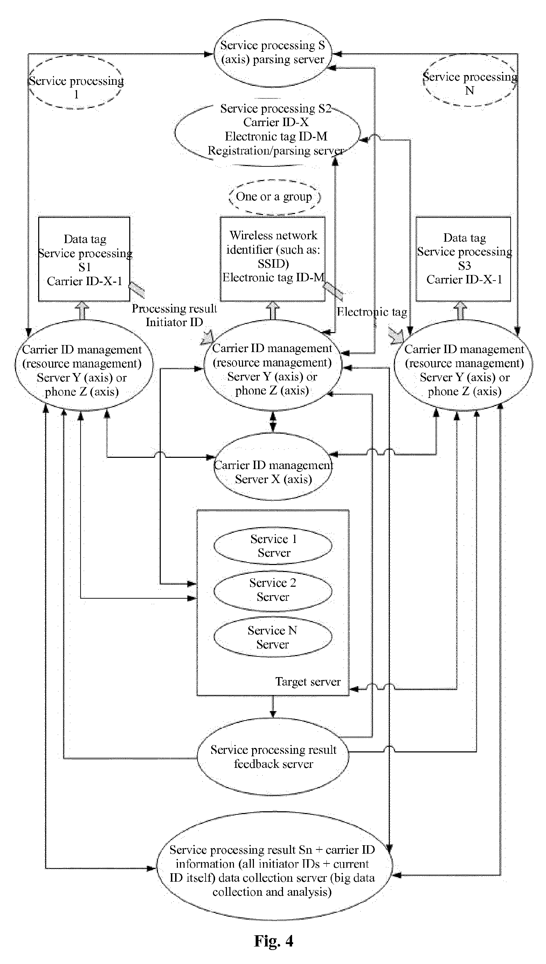

In particular, in the case of using an electronic tag as a data tag, the application mode of the present invention is shown in Fig. 4.

When the terminal equipment is an intelligent terminal or a computer, the method comprises the following steps:
1. The intelligent terminal or the computer at each node runs a special App or software, the software stores wireless network equipment identifiers (such as: SSIDs) in the organization and corresponding security passwords, and the intelligent terminal or the computer connects automatically the wireless network that can be connected through the special software for communication.
2. The ID-X obtains the information (including: the service processing information S1 and the information of the carrier ID-X-1) of the data tag of the ID-X-1, and generates a new service processing information S2 according to the operation of the ID-X.
3. The identifier (such as: SSID) of the wireless network equipment AP at the release site of the ID-X is defined according to an electronic tag coding rule, and the electronic tag ID-M of the next level of the ID-X is generated.
4. The ID-X operates the special App or software on the intelligent terminal or the computer, transmits the service processing information S2 generated by the ID-X, plus the information of the carrier ID-X and the information of the electronic tag ID-M to the electronic tag registration / parsing server to register, generates a new virtual digital tag, and stores it in the electronic tag registration / parsing server.
5. The ID-X+1 obtains the identifier of the wireless network equipment connected by connecting the wireless network through the special App or software of the intelligent terminal or the computer, to obtain the electronic tag ID-M.
6. The ID-X+1 sends the electronic tag ID-M obtained to the electronic tag registration / parsing server to parse, and obtains the information (including: the service processing information S2 and the information of the carrier ID-X/ID-M) of the ID-X/ID-M virtual digital tag.

When the terminal equipment is a wireless network equipment, the method comprises the following steps:
1. The intelligent terminal or the computer at each node runs a special App or software, the software stores wireless network equipment identifiers (such as: SSIDs) in the organization and corresponding security passwords, and the intelligent terminal or the computer connects automatically the wireless network that can be connected through the special software for communication.
2. Each wireless network equipment has the ID-M defined according to an electronic tag coding rule, and a storage space (a virtual digital tag) capable of storing related information, the related information of the storage space can be modified by the owner of the equipment, and is provided to the special App or software running on the intelligent terminal or the computer to read.
3. The ID-X obtains the information (including: the service processing information S1 and the information of the carrier ID-X-1) of the data tag of the ID-X-1, and generates a new service processing information S2 according to the operation of the ID-X.
4. The ID-X operates the special App or software on the intelligent terminal or the computer, transmits the service processing information S2 generated by the ID-X plus the information of the carrier ID-X to the storage space capable of storing the virtual digital tag in the wireless network equipment of the electronic tag ID-M.
5. The ID-X+1 obtains the data (the service processing information S2 and the information of the carrier ID-X) stored in the wireless network equipment connected currently by connecting the wireless network through the special App or software of the intelligent terminal or the computer.
6. The special App or software of the intelligent terminal or the computer of the ID-X+1 obtains the information (including: the service processing information S2 and the information of the carrier ID-X/ID-M) of the ID-X/ID-M virtual digital tag by using the stored data obtained from the wireless network equipment and the electronic tag ID-M of the wireless network equipment.

To sum up, the advantages of the present invention in the practical applications not only are to realize the transmission of the data tag by using the offline carriers, but also are that:
1. The present invention has the characteristics of cross organization and cross platform, establishes a huge, dynamic, large-area, multi-format, business-activity-participating service system by using platform resource advantages, and spreads through commercial agreement forms.
2. The present invention, by forwarding the data tag, overcomes the technical fault of offline commercial activities that can be not settled through the existing internet of things (internet) technologies, to make the offline carriers online.
3. Resources that can be online and Resources can not be online both can participate in business activities and share benefits.
4. The present invention finally can collect and analyze the participation effects of the offline and online carriers, and provide the redistribution of the produced benefits they participate in.

With the systems and the methods for applying and processing data tag carrier information of the present invention, after the first terminal in the application system obtains the initial data tag, the first data tag including the first service processing information, the information of the first terminal and the information of the first carrier is released through each of the first carriers in the first carrier group; then, after the subsequent Nth terminal obtains the N-1th data tag of the previous terminal, the Nth data tag also can be released through each of the Nth carriers in the Nth carrier group, so that the present invention can effectively record information of the carrier of the data tag during the transmission process of the data tag, and at the same time support the transmission of the data tag displayed by an offline carrier, to expand the transmission range of the data tag; in addition, in the processing system and method of the present invention, after the final terminal interacts with the function server to achieve the service functions, the function server can obtain the transmission path corresponding to the initial data tag, so that the data tag can be applied in a larger commercial scale, moreover, in the systems and the methods for applying and processing data tag carrier information of the present invention, the structures of the systems are simple, the realization modes of the methods are simple and convenient, and the realization costs are low.

In the present specification, the present invention has been described with specific examples. However, it should be noted that various modifications and variations may be made without departing from the spirit and scope of the invention. Accordingly, the specification and drawings are to be regarded for illustrative rather than restrictive purposes.

## Claims

1. A system for applying data tag carrier information, comprising:
a first terminal, used to obtain an initial data tag from an initial carrier, the initial data tag including corresponding initial service processing information and corresponding information of the initial carrier;
a first carrier group, connected to the first terminal, including at least one first carrier, and used to obtain the initial data tag from the first terminal, and release a first data tag through each of the first carriers, the first data tag including first service processing information, information of the first terminal and information of the first carrier releasing the first data tag.

2. The system for applying data tag carrier information of claim 1, wherein, the system further comprises:
a Nth terminal, used to obtain a N-1th data tag from a N-1th carrier, the N-1th data tag including corresponding N-1th service processing information, corresponding information of the N-1th terminal and corresponding information of the N-1th carrier;
a Nth carrier group, connected to the Nth terminal, including at least one Nth carrier, and used to obtain the N-1th data tag from the Nth terminal, and release a Nth data tag through each of the Nth carriers, the Nth data tag including Nth service processing information, information of the Nth terminal and information of the Nth carrier releasing the Nth data tag.

3. The system for applying data tag carrier information of claim 2, wherein, the system further comprises a carrier resource manager connected to the first terminal and the Nth terminal, the carrier resource manager stores information of the carrier groups connected to the terminals, and is used to send corresponding information of the carrier groups to the first terminal and the Nth terminal.

4. The system for applying data tag carrier information of claim 2, wherein, the first data tag further includes the information of the initial carrier; the Nth data tag further includes the information of the N-1th carrier.

5. The system for applying data tag carrier information of claim 2, wherein, the system further comprises a service processing information manager connected to the first terminal and the Nth terminal, the service processing information manager is used to store the first service processing information, the Nth service processing information and the corresponding information of the first terminal, the corresponding information of the first carrier and the corresponding information of the Nth terminal and the corresponding information of the Nth carrier.

6. The system for applying data tag carrier information of any one of claims 2-5, wherein, the data tag is a bar code or a RFID tag.

7. The system for applying data tag carrier information of claim 6, wherein, the carrier is a display equipment, a printed matter, a building wall surface or a furniture surface.

8. The system for applying data tag carrier information of any one of claims 2-5, wherein, the data tag includes an electronic tag determined according to a specific coding rule, the first data tag includes the first service processing information, the information of the first terminal and a first electronic tag releasing the first data tag; the Nth data tag includes the Nth service processing information, the information of the Nth terminal and a Nth electronic tag releasing the Nth data tag.

9. The system for applying data tag carrier information of claim 8, wherein, each of the first terminal and the Nth terminal has an electronic tag module, the electronic tag modules of the first terminal and the Nth terminal are used to obtain the corresponding first electronic tag and the corresponding Nth electronic tag respectively via a network.

10. The system for applying data tag carrier information of claim 9, wherein, the system further comprises an electronic tag server, connected to the first terminal and the Nth terminal respectively via the network, the electronic tag server stores the first electronic tag and the Nth electronic tag, and is used to provide the first data tag corresponding to the first electronic tag to the first terminal and provide the Nth data tag corresponding to the Nth electronic tag to the Nth terminal.

11. The system for applying data tag carrier information of claim 9, wherein, the system further comprises a network access device, connected to the first terminal and the Nth terminal respectively, the network access device stores the first electronic tag and the Nth electronic tag and the first data tag corresponding to the first electronic tag and the Nth data tag corresponding to the Nth electronic tag, and is used to provide the first data tag corresponding to the first electronic tag to the first terminal and provide the Nth data tag corresponding to the Nth electronic tag to the Nth terminal.

12. The system for applying data tag carrier information of claim 8, wherein, the electronic tag is a wireless network identifier SSID.

13. The system for applying data tag carrier information of claim 1, wherein, the terminal is a PC, a smart phone, a tablet PC or a RFID tag scanner.

14. A method for applying data tag carrier information, comprising the following steps:
(A1) obtaining an initial data tag from an initial carrier through a first terminal according to an operation of a first user, the initial data tag including corresponding initial service processing information and corresponding information of the initial carrier;
(A2) sending the initial data tag to a first carrier group connected to the first terminal through the first terminal, the first carrier group including at least one first carrier;
(A3) releasing a first data tag through each of the first carriers in the first carrier group, the first data tag including first service processing information, information of the first terminal and information of the first carrier releasing the first data tag.

15. The method for applying data tag carrier information of claim 14, wherein, the method further comprises the following steps:
(B1) obtaining a N-1th data tag from a N-1th carrier through a Nth terminal according to an operation of a Nth user;
(B2) sending the N-1th data tag to a Nth carrier group connected to the Nth terminal through the Nth terminal, the Nth carrier group including at least one Nth carrier;
(B3) releasing a Nth data tag through each of the Nth carriers in the Nth carrier group, the Nth data tag including Nth service processing information, information of the Nth terminal and information of the Nth carrier releasing the Nth data tag.

16. The method for applying data tag carrier information of claim 15, wherein, the first terminal and the Nth terminal are connected to a carrier resource manager, the carrier resource manager stores information of the carrier groups connected to the terminals, and the step (A2) comprises the following step in details:
obtaining the information of the first carrier group connected to the first terminal via the carrier resource manager, and sending the initial data tag to the at least one first carrier in the first carrier group through the first terminal;
the step (B2) comprises the following step in details:
obtaining the information of the Nth carrier group connected to the Nth terminal via the carrier resource manager, and sending the N-1th data tag to the at least one Nth carrier in the Nth carrier group through the Nth terminal.

17. The method for applying data tag carrier information of claim 15, wherein, the first data tag further includes the information of the initial carrier; the Nth data tag further includes the information of the N-1th carrier.

18. The method for applying data tag carrier information of claim 15, wherein, the first terminal and the Nth terminal are connected to a service processing information manager, and the method further comprises the following steps:
(A4) storing the first service processing information and the corresponding information of the first terminal and the corresponding information of the first carrier through the service processing information manager;
(B4) storing the Nth service processing information and the corresponding information of the Nth terminal and the corresponding information of the Nth carrier through the service processing information manager.

19. The method for applying data tag carrier information of any one of claims 15-18, wherein, the data tag is a bar code or a RFID tag.

20. The method for applying data tag carrier information of any one of claims 15-18, wherein, the data tag includes an electronic tag determined according to a specific coding rule, and the step (A3) comprises the following step in details:
releasing the first data tag through each of the first carriers in the first carrier group, the first data tag including the first service processing information, the information of the first terminal and a first electronic tag releasing the first data tag;
the step (B3) comprises the following step in details:
releasing the Nth data tag through each of the Nth carriers in the Nth carrier group, the Nth data tag including the Nth service processing information, the information of the Nth terminal and a Nth electronic tag releasing the Nth data tag.

21. The method for applying data tag carrier information of claim 20, wherein, each of the first terminal and the Nth terminal has an electronic tag module and is connected to an electronic tag server, the electronic tag server stores the first electronic tag and the Nth electronic tag, and the step (A3) comprises the following step in details:
releasing the first data tag obtained from the electronic tag server through each of the first carriers in the first carrier group, the first data tag including the first service processing information, the information of the first terminal and the first electronic tag releasing the first data tag;
the step (B3) comprises the following step in details:
releasing the Nth data tag obtained from the electronic tag server through each of the Nth carriers in the Nth carrier group, the Nth data tag including the Nth service processing information, the information of the Nth terminal and the Nth electronic tag releasing the Nth data tag.

22. The method for applying data tag carrier information of claim 20, wherein, each of the first terminal and the Nth terminal has an electronic tag module and is connected to a network access device, the network access device stores the first electronic tag or the Nth electronic tag and the first data tag corresponding to the first electronic tag and the Nth data tag corresponding to the Nth electronic tag, and the step (A3) comprises the following step in details:
releasing the first data tag obtained from the network access device through each of the first carriers in the first carrier group, the first data tag including the first service processing information, the information of the first terminal and the first electronic tag releasing the first data tag;
the step (B3) comprises the following step in details:
releasing the Nth data tag obtained from the network access device through each of the Nth carriers in the Nth carrier group, the Nth data tag includes the Nth service processing information, the information of the Nth terminal and the Nth electronic tag releasing the Nth data tag.

23. The method for applying data tag carrier information of claim 20, wherein, the electronic tag is a wireless network identifier SSID.

24. A system for processing data tag carrier information, comprising:
the system for applying data tag carrier information of claim 1;
a final terminal, used to, according to an operation of a final user, obtain the first data tag or the Nth data tag from the first carrier or the Nth carrier, and parse the first data tag or the Nth data tag, to obtain the corresponding first/Nth service processing information, the corresponding information of the first/Nth terminal and the corresponding information of the first/Nth carrier;
a function server, used to generate and release the initial data tag according to service functions, and is used to interact with the final terminal, to realize the service functions.

25. The system for processing data tag carrier information of claim 24, wherein, the function server is further connected to a service processing information manager, the service processing information manager is used to obtain the information of the carrier releasing the first/Nth service processing information from the service processing information manager according to the first/Nth service processing information, and determine the initial service processing information and its transmission path according to the information of the carrier releasing the first/Nth service processing information.

26. A method for processing data tag carrier information, comprising the following steps:
(C1) releasing the first data tag or the Nth data tag on the first carrier or the Nth carrier with the method for applying data tag carrier information of claim 14 or claim 15;
(C2) obtaining the first data tag or the Nth data tag through a final terminal according to an operation of a final user;
(C3) parsing the first data tag or the Nth data tag through the final terminal, to obtain the corresponding first/Nth service processing information, the corresponding information of the first/Nth terminal and the corresponding information of the first/Nth carrier;
(C4) interacting the final intelligent terminal with a function server corresponding to the first/Nth service processing information according to the first/Nth service processing information to achieve service functions.

27. The method for processing data tag carrier information of claim 26, wherein, the function server is further connected to a service processing information manager, and the method further comprises the following steps:
(C5) obtaining the information of the carrier releasing the first/Nth service processing information from the service processing information manager through the function server according to the first/Nth service processing information;
(C6) determining the initial service processing information and its transmission path through the function server according to the information of the carrier releasing the first/Nth service processing information.

28. The method for processing data tag carrier information of claim 26 or claim 27, wherein, the method further comprises the following step before the step (C1):
(C0) generating and releasing the initial data tag having the initial service processing information and the information of the initial carrier on the initial carrier through the function server.
